# EUROPEAN PATENT SPECIFICATION

(11) **EP 2 749 757 B1**
(45) Date of publication and mention of the grant of the patent: **15.05.2019**
(21) Application number: 12199692.0
(22) Date of filing: 28.12.2012
(51) Int. Cl.: F02D 41/00, F01N 13/10, F02B 37/02, F02B 37/22, F02B 37/24

(54) **Method and apparatus for controlling a twin scroll turbocharger with variable geometry depending on the exhaust gas recirculation**
Verfahren und Vorrichtung zum Steuern eines Aufladers mit zwei Spiralkanälen und variabler Turbinengeometrie abhängig von der Abgasrückführung
Procédé et appareil pour contrôler un turbocompresseur avec une turbine à géométrie variable en fonction de la recirculation de gaz d'échappement

(43) Date of publication of application: 02.07.2014
(73) Proprietor: FPT Industrial S.p.A., 10156 Torino (IT)
(72) Inventor: D'Epiro, Clino, 10091 ALPIGNANO (IT)
(74) Representative: Franzolin, Luigi

(56) References cited:
- EP-A1- 2 295 769
- WO-A2-2009/037120
- DE-A1-102008 049 091
- DE-A1-102008 052 088
- DE-A1-102010 021 926
- DE-C1- 4 242 494

## Description

### Application field of the invention

The present invention relates to the field of the systems for the exhaust gas recirculation, and in particular to an exhaust gas recirculation system EGR in a supercharged engine.

### Description of the prior art

Due to the regulations imposing emission limits, the majority of the manufacturers has introduced and improved the EGR technique to reduce NOx emissions.

When a SCR device is present, which reduces the same pollutant, it can be advantageous to recirculate less than 14-15% of the exhaust gas to obtain an advantage in terms of fuel consumption, given by an improved combustion timing.

The advantages in terms of fuel consumption obtained by the use of the EGR technique are nullified, at least partially, by the need to keep enough counterpressure to induce the exhaust gas recirculation.

Such counterpressure causes a negative work in the engine's pumping cycle which highly limits the aforementioned advantages.

When the engine comprises at least six cylinders, but more and more often also when it comprises just four cylinders, a twin-scroll turbine is adopted, namely having two separate distributors that have the same or different dimensions and flow rates.

According to a solution known in the art, the two scrolls have different dimensions. Half of the number of the cylinders is connected to the smaller scroll, while the other half is connected to the larger scroll. The smaller scroll, by opposing a higher resistance to the passage of the gas, allows to obtain the necessary counterpressure to circulate the EGR into the intake manifold. Thus the pumping losses are limited to the three cylinders connected to the smaller scroll.

Hereinafter in the present description the scroll connected to the EGR branch will be called EGR scroll, while the other scroll that is not connected to the EGR branch will be called second scroll.

The exhaust manifold of the first three cylinders is obviously separated from the exhaust manifold of the other three cylinders. According to such solution, however, the counterpressure is always present since it is a function of the effusion static section of the smaller scroll, which is fixed. An appropriate dimensioning allows to obtain an adequate EGR flow in all the operating fields of the engine.

In addition, the flow rate of the recirculated gas that does not pass through the EGR scroll has to be compensated with a smaller effusion static section in the non-EGR scroll, in order to obtain an adequate supercharging from a low engine speed. At high engine speed, a waste-gate valve allows to bypass, at least partially, the non-EGR scroll in order to avoid the turbine to reach its runaway speed.

Furthermore, such solution requires the presence of a valve on the EGR pipe for a fine control of the recirculated EGR flow. Usually it is an on-off valve with a stepper movement.

Such solution is valid when the recirculated gas percentage does not vary much among the different operating points.

In order to avoid keeping such counterpressure at its maximum, it is known the use of a variable geometry distributor on the EGR scroll, generally of the sliding wall time, in order to recover a small part of efficiency. Also when the EGR scroll is of the a variable geometry type, it is smaller than the other, in order to avoid that, in certain engine operating conditions, the distributor has to be too closed to determine the necessary counterpressure, which results in too much energy transferred to the turbine, already activated by the second fixed-distributor scroll and thus to avoid opening the waste-gate valve too early, loosing useful energy. As a consequence, the negative pumping work is always performed and is performed by all of the engine cylinders, even though with a different extent.

The aforementioned solutions are not suitable for those applications wherein the SCR is particularly efficient, to the extent that it limits the use of the EGR technique. In such circumstances, indeed, it will be desirable to exclude the EGR in those engine operating fields wherein it does not bring any advantage, thus stopping the aforementioned negative pumping work. Furthermore, it will be desirable to have a full control of the EGR flow rate in a larger range, possibly stopping the pumping work of the cylinders that are not connected to the EGR branch. Therefore, according to the prior art it is not possible to independently regulate the boost pressure of the counterpressure that is necessary to recirculate the exhaust gas.

### Summary of the invention

Therefore the aim of the present invention is to overcome all the aforementioned drawbacks and to provide an EGR recirculation system such that the pumping losses are minimized.

Another aim of the present invention is to allow an independent regulation of the boost pressure of the counterpressure that is necessary to recirculate the exhaust gas.

According to the present invention, a twin-scroll turbine is used, wherein each one of the scrolls is of the variable geometry type, and can be actuated independently of one another.

According to a preferred alternative embodiment of the invention, the respective effusion static sections of both scrolls are preferably dimensioned as if the engine was of the type without EGR.

Advantageously, by virtue of the present invention, it is possible to nullify the negative pumping work, until an exhaust gas recirculation is necessary. In particular, it is possible to reduce, if not nullify, the pumping work when the engine is operated at high revolutions per minute. As it will be explained below, the mass of the recirculated exhaust gas being the same, the turbine tends to accelerate or to slow down according to the amount of the remaining gas flow passing through the EGR scroll: this depends on the engine operating point. According to the present invention, the behaviour of the turbine is controlled/stabilized by means of the second variable geometry scroll, namely the non-EGR scroll.

According to a preferred alternative embodiment of the invention, the EGR scroll has a respective static section whose effusion is equal to the second non-EGR scroll. Thus, one can be of the sliding wall type and the other of the sliding vane type.

According to a preferred alternative embodiment of the invention, the two scrolls have identical dimensions and characteristics.

It is preferred that the variable geometry is of the type per se known, generally of the sliding vane or of the sliding wall type.

A first aspect of the present invention relates to a method for arranging the twin-scroll turbine in accordance with the present invention.

According to another aspect of the present invention, a method for controlling the fluid dynamics regulation of the two scrolls is provided.

In particular, the means for regulating the internal fluid dynamics of the second scroll are regulated also as a function of the regulation of the EGR scroll, so that the overall energy transferred to the turbine will balance the power absorbed by the supercharger or by an electric generator driven by the turbine.

Advantageously, it is thus possible to avoid bringing the turbine and/or the supercharger at speeds higher than admissible ones, but also to regulate the boost pressure at the exact required value, regardless of the amount of recirculated EGR, without necessarily using dissipative regulation means, such as for example a waste-gate valve.

Advantageously, the fact of regulating the second scroll to compensate the work provided by the first scroll to the turbine generally decreases the negative pumping work of the three cylinders connected to the second scroll, compared with what happens in the systems of the prior art. Such reduction of the negative pumping work, at least partial, compensates the negative pumping work of the other three cylinders connected to the EGR scroll, with an undoubted improvement of the overall efficiency of the system.

This brings to a lower negative pumping work per EGR percentage, which may consequently allow a reduction of the aqueous urea solution to be injected or an anticipation of the combustion timing with a consequent reduction of the fuel consumption.

The object of the present invention is also an exhaust gas recirculation system, in accordance with claim 1.

It is also object of the present invention a twin-scroll turbine wherein both scrolls are of the variable geometry type and can be actuated independently of one another. Another object of the present invention is a method for controlling the aforementioned scheme.

Another object of the present invention is an internal combustion engine and a vehicle implementing the aforementioned system.

The claims are an integral part of the present description.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:
figure 1 shows a general scheme of an exhaust gas recirculation system according to the present invention;
figures 2 and 3 show preferred alternative embodiments of a component of the scheme shown in figure 1;
figure 4 shows a block diagram of a control scheme of the system according to the previous figures.

In the figures the same reference numbers and letters identify the same elements or components.

### Detailed description of preferred embodiments of the invention

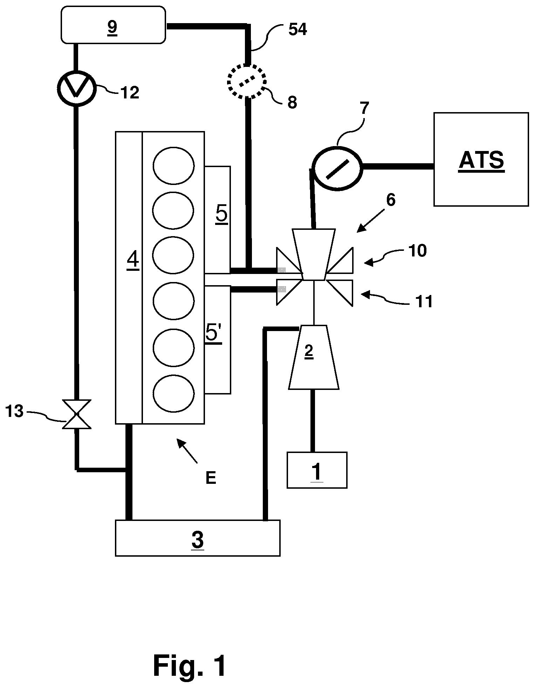

With reference to figure 1, an internal combustion engine E comprises an intake manifold 4 and a pair of exhaust manifolds 5 and 5' each one of them connected to half of the number of cylinders of the engine E. The two exhaust manifolds are distinct and separate from each other.

Each one of the two exhaust manifolds is connected to one of the two scrolls 10, 11 of the turbine 6. Only one of these comprises also a branch 54 for the exhaust gas recirculation EGR. In particular, such branch 54 connects the exhaust manifold 5 to the intake manifold 4.

The turbine 6 is of the twin-scroll type, wherein respective variable geometry distributors are housed.

In particular, the EGR scroll 10 is connected with the exhaust manifold 5, while the other scroll 11 is connected with the exhaust manifold 5'.

The output of the turbine 6 is connected to the exhaust gas after-treatment system ATS.

The turbine may drive the supercharger 2 in rotation by means of a fixed mechanical connection or by means of an electric generator powering an electric motor, which, in its turn, drives the supercharger 2.

Fresh air is sucked by the supercharger 2 through an air filter box 1 and is cooled by means of a cooler 3 before entering the intake manifold 4. Thus, the inlet of the supercharger is connected to the filter box 1 and its outlet is connected to the intake manifold 4 by means of a cooler 3.

According to the alternative embodiment shown in figure 1, also the recirculation branch 54 comprises preferably, from exhaust to intake, its own cooler 9, called EGR cooler, and a check valve 12 and a sensor measuring the recirculated gas mass 13.

Possibly, according to a configuration not shown in the figures, the branch 54 may be connected to the intake manifold upstream of the cooler 3. In such case the EGR cooler 9 may be absent.

According to a preferred alternative embodiment of the present invention, the turbine 6 comprises two scrolls having the same dimensions, suitable to allow the operation of the engine E without any exhaust gas recirculation and without dissipating useless pumping work to the cylinders connected to the exhaust manifold 5, when the exhaust gas recirculation is not necessary. In other words, the EGR scroll 10 is dimensioned and controllable so that, at least in an operating condition, generally at a higher or at the same number of revolutions than/as the maximum torque, it does not generate enough counterpressure for the exhaust gas recirculation. In other words, the pressure at the intake manifold is higher than the pressure at the exhaust manifold. This means that the effusion static section of EGR scroll is dimensioned as if the engine was without EGR. Upon an input from the engine E control unit, the necessary EGR percentage is determined for the actuation of the optimal combustion strategy, which may be of the type per se known, for example by means of a look-up table or by a feedback control.

On the basis of the necessary counterpressure, the equivalent effusion section of the exhaust gas through the EGR scroll is identified. For example, the geometry of the EGR scroll is varied.

An increase of the counterpressure on the EGR branch corresponds to a decrease of the "residual" gas flow rate crossing the scroll of the EGR turbine, but the speed of such residual gas is accelerated against the impeller of the turbine, releasing its kinetic energy on the impeller of the turbine.

The kinetic energy Ecin_Egr transferred to the turbine from said residual flow rate crossing the EGR scroll varies in relation to the operating point of the engine and to the mass of recirculated gas M_Egr, thus Ecin_Egr=f(M_Egr, BMEP, RPM), where BMEP corresponds to the known brake medium effective pressure, and RPM corresponds to the revolutions per minute of the engine.

According to the present invention, the kinetic energy Ecin transferred as a whole to the impeller of the turbine 6 is made independent of such residual flow rate M_Egr and of its respective energy content. This is obtained by regulating independently the second scroll. Thus, the rotation speed of the turbo-supercharger is regulated only on the basis of the overpressure that is necessary to the supercharger for the intake, namely of the energy Ecomp that is necessary to the supercharger 2, making such overpressure independent of the mass of the recirculated gas. Such regulation, in particular, allows to avoid reaching the nominal limit speed of the turbo-supercharger. In other words, Ecin=f(Ecomp).

When the EGR flow rate is high, it is evident that the contribution of kinetic energy offered by the turbine of the EGR scroll decreases, but it is compensated by the second scroll.

Thus each scroll, according to the present invention, is able to transmit more than 50% of the kinetic energy Ecomp that is necessary to activate the turbo-supercharger assembly, when the respective distributors are regulated at the minimum effusion section. This is advantageous also to improve the progression of the turbo-supercharger acceleration at low speed, with reduced acceleration time of the vehicle. According to the present invention, at high speed, namely at a speed exceeding the revolution per minute for the maximum engine torque, the two distributors are regulated in a compensative way, namely without exceeding the limits of the design of the turbo-supercharger.

It is also to be noted that, according to a preferred alternative embodiment of the invention, along the connection between the exhaust manifold 5 and the inlet of the EGR scroll 10, no further regulation valves or choking elements are present.

The scroll 11 compensates the work of the scroll 10, by providing:
- in some conditions a higher energy to the turbine than the scroll 10, since the latter is regulated as a function of the EGR flow rate,
- in other conditions by providing less energy to the turbine 6 than the scroll 10 does, in order to avoid the supercharger to reach its runaway speed rate.

For example, in the condition wherein the turbine 6 is mechanically connected with the supercharger 2, the equivalent effusion section of the scroll 10 defines a speed of rotation of the turbo-supercharger. When the speed of rotation of the supercharger exceeds a predetermined threshold, the scroll 11 is controlled so that it opens its vanes, or its wall, (widening its effusion section) compensating the increased energy transferred to the turbine by crossing the scroll 10.

On the contrary, when the turbine is connected to a generator, then the scroll can be regulated to provide the necessary energy for recharging the vehicle batteries. According to a further preferred alternative embodiment of the invention, a fine regulation valve 8 and/or a check valve 12 may be present on the EGR branch 54. Such valve 8, represented for the sake of completeness in the scheme of figure 1, may be optionally provided as an additional regulation element when the engine is used in a mission comprising frequent and rapid transient conditions.

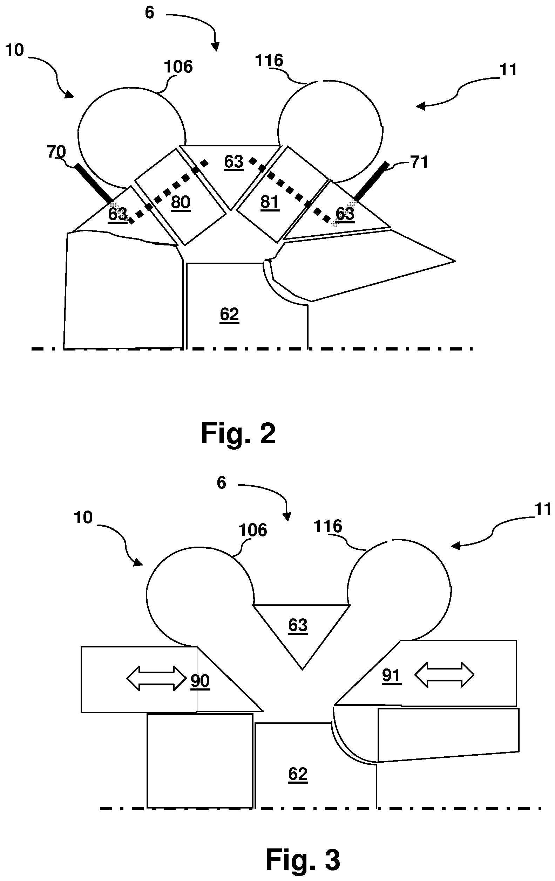

In particular, the counterpressure may be so low that the fine regulation valve 8 and/or the check valve 12 may avoid that the fresh air bypasses the engine E and arrives directly at the exhaust by means of the EGR branch 54. According to another aspect of the invention, preferred alternative embodiments of the twin-scroll turbine that are also object of the present invention are now described. With reference to figure 2, a twin-scroll turbine is shown, both scrolls being of the variable geometry type with swinging vanes.

In the figure, which shows a section according to the axis of the impeller 62, it is possible to observe the scrolls 106 and 116 with their respective swinging vanes 80 and 81 controlled by respective control elements 70 and 71. Such control elements are fully reciprocally independent.

The support rings 63 are suitable to define, together with the vanes themselves, to effusion directions that converge on the impeller.

The movement of the vanes with respect to a respective rotation axis, shown with a dashed line, determines intermediate positions between the full opening and the closing of the vanes. Wherein closing does not mean a full closing, but a smaller effusion section. Such technology is per se known in single-scroll turbines. In twin-scroll turbines it is known to use a single series of swinging vanes so that they intercept the flow leaving both scrolls. This, of course, does not allow to regulate the contribution of the scroll in a reciprocally independent way.

With reference to figure 3, a twin scroll turbine 6 according to the present invention is shown, implementing the so-called sliding sleeve technology on both the scrolls. In other words, each scroll has its own respective means for regulating the internal geometry. The ones being independent of the others. According to such solution, the effusion regulation is realized by means of the sliding elements according to the double head arrows, namely parallel to the impeller axis 62, to fully open or to annular inlet opening of the exhaust gas. Also in this case, the sliding elements can be individually controlled. Also the so-called sliding sleeve technology is per se known in single-scroll turbines. The application of a single sliding sleeve intercepting simultaneously the flow of two scrolls is also known in the art, with the limits described above.

A method for controlling the turbine is now described. According to a first aspect, at low speed, namely at a speed lower than revolutions per minute at the maximum torque, both distributors of the two scrolls are closed to obtain the maximum progression of the turbo-supercharger 6,2.

Advantageously, such transient condition increases the counterpressure a lot, which facilitates the exhaust gas recirculation. It is exactly in the transient conditions that the emissions increase, thus such counterpressure facilitating the exhaust gas recirculation is particularly advantageous.

At a stationary speed of the turbo-supercharger , on the contrary, the EGR scroll is regulated as a function of the necessary EGR flow rate, while the other scroll 11 is regulated in a way complementary to the scroll 10 in order to provide to the turbine 6 the energy Ecomp necessary to the supercharger.

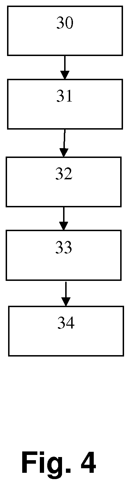

The method is described with reference to the functional block diagrams of figure 4, wherein each block is intended to correspond to the logic functions performed by the apparatus which realizes them:
- Step 30: calculation of an exhaust gas flow rate to be recirculated and of a boost pressure of the engine (E) ;
- step 31: regulation of the first scroll (10) to realize a counterpressure such that to ensure the recirculation of said exhaust gas flow rate given said boost pressure;
- step 32: calculation of the amount of energy provided by said first scroll (10) to an impeller of the turbine (6),
- step 33: calculation of a remaining amount of energy to be provided to said impeller, as a function of said boost pressure;
- step 34: regulation of the second scroll (11) in order to transfer said remaining amount to the impeller of the turbine (6).

When the quantity of EGR to be recirculated is negligible or equal to zero, the EGR scroll 10 can be regulated in order to be as open/closed as the second scroll 11. If a fine regulation valve 8 is present, such identical regulation can be ensured at any speed. On the contrary, if such fine regulation valve is not present, then the EGR scroll 10 can be regulated to be as open/closed as the second scroll 11 until the counterpressure is such as to induce the exhaust gas recirculation. Once such threshold has been exceeded, further closing regulation are up to the second scroll.

Advantageously, the fact that there is no pumping work when the exhaust gas recirculation is not necessary, according to the tests performed, allows to obtain an improvement of the engine overall performance of about 3-5%, with an undoubted fuel saving.

The present invention may advantageously be realized by means of a computer program, which comprises program code means performing one or more steps of said method, when said program is run on a computer. For this reason the scope of the present patent is meant to cover also said computer program and the computer-readable means that comprise a recorded message, such computer-readable means comprising the program code means for performing one or more steps of such method, when such program is run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details. The elements and the characteristics described in the different preferred embodiments may be combined without departing from the scope of the present application.

## Claims

1. Exhaust gas recirculation system in a supercharged engine, the engine (E) comprising
- a predetermined number of cylinders,
- an intake manifold (4) and
- a pair of exhaust manifolds (5, 5'), distinct and separated from each other, each one of them connected to half of the cylinders of the engine (E), only one (5) of said pair of exhaust manifolds being connected to the intake manifold (4) to realize an exhaust gas recirculation (EGR) according to predetermined operating conditions of the engine (E),
- a twin-scroll (10,11) turbine (6), wherein a first scroll (10) has a respective inlet connected with said first exhaust manifold (5) and a second scroll (11) has a respective inlet connected with said second exhaust manifold (5'),
**Characterized in that** each one of the scrolls is of the variable geometry type and one of the scrolls (10) having means for regulating the geometry that are independent of the means for regulating the geometry of the other scroll (11),
and in comprising means for controlling the geometry of the scrolls (10, 11) configured to
- regulate (i) the first scroll (10) as a function of a mass of exhaust gas to be recirculated (EGR),
- regulate (ii) the second scroll (11) as a function of the overall energy (Ecomp) to be provided to the turbine (6).

2. System according to claim 1, wherein said first scroll (10) and said second scroll (11) have respective effusion static sections that are equal to each other.

3. System according to one of the claims 1 or 2, wherein said scrolls are constructively identical to each other.

4. System according to claim 1, wherein said regulation is realized in stationary conditions of a turbo-supercharger assembly (6,2) comprising said turbine (6) and a supercharger (2) for supercharging the engine (E) driven by the turbine (2).

5. System according to one of the previous claims from 1 to 3, wherein said means for controlling the geometry of the scrolls (10, 11) are configured to equally regulate said geometries, in transient conditions of the turbo-supercharger (6,2) comprising said turbine (6) and a supercharger (2) for supercharging the engine (E) driven by said turbine.

6. System according to one of the previous claims from 1 to 5, wherein said regulations (i, ii) are realized in order to avoid the turbo-supercharger (6, 2) or the turbo-generator to reach a runaway speed rate.

7. System according to claim 1, wherein said regulation is realized in stationary conditions of a turbo-generator assembly (6,2) comprising said turbine (6) axially connected to an electric generator powering the vehicle batteries.

8. System according to claim 7, wherein said overall energy is a function of an energy to be transferred to the electric generator.

9. System according to one of the previous claims, wherein said connection between said first exhaust manifold (5) and said intake manifold (4) comprises:
- a fine regulation valve of the EGR (8) and/or
- a check valve (12) and/or
- an EGR cooler (9).

10. Method for recirculating exhaust gas in an engine (E) supercharged by means of a turbine-supercharger assembly (6, 2) with a twin-scroll (10, 11) turbine (6),
Wherein the engine has a pair of exhaust manifolds (5, 5'), distinct and separated from each other, each one of them connected to half of the cylinders of the engine (E), only one (5) of said pair of exhaust manifolds being connected to the intake manifold (4) to realize an exhaust gas recirculation (EGR) according to predetermined operating conditions of the engine (E), wherein the turbine has first scroll with a respective inlet connected with said first exhaust manifold (5) and a second scroll (11) a respective inlet connected with said second exhaust manifold (5'),
The method comprising the step of arranging both scrolls (10, 11) so that each one of them has a variable geometry, one scroll (10) having means for regulating the geometry that are independent of the means for regulating the geometry of the other scroll (11), the method comprising the following steps:
- first regulation (i) of the first scroll (10) as a function of a mass of exhaust gas to be recirculated,
- second regulation (ii) of the other second scroll (11) as a function of the overall energy (Ecomp) to be provided to the turbine (6)..

11. Method according to claim 10, comprising the step of dimensioning a corresponding effusion static section of the first scroll (10), cooperating in the exhaust gas recirculation, as if the engine (E) was not provided with EGR.

12. Method according to claims 10 or 11, comprising the step of dimensioning effusion static sections of the scrolls (10, 11) in a way equal to each other.

13. Control method according to claim 10, wherein said steps are performed in stationary conditions of a turbo-supercharger assembly comprising said turbine (6) and a supercharger (2) driven by said turbine or in stationary conditions of a turbo-generator assembly comprising said turbine (6) and a generator driven by said turbine to recharge the vehicle batteries.

14. Method according to one of the claims 10 or 13, wherein said regulations (i, ii) are realized in order to avoid the turbo-supercharger assembly (6, 2) or the turbogenerator to reach a runaway speed rate.

15. Method according to any one of the preceding claims from 10 to 14, comprising the following steps:
- (30) calculation of an exhaust gas flow rate to be recirculated and of a boost pressure of the engine (E) ;
- (31) regulation of the first scroll (10) a to realize a counterpressure such that to ensure the recirculation of said exhaust gas flow rate given said boost pressure;
- (32): calculation of an amount of energy provided by said first scroll (10) to an impeller of the turbine (6),
- (33): calculation of a remaining amount of energy to be provided to said impeller, as a function of said boost pressure;
- (34): regulation of the second scroll (11) in order to transfer said remaining amount to the impeller of the turbine (6).

16. Method according to one of the claims from 10 to 15, wherein when a fine regulation valve (8) is present on an EGR recirculation pipe (54), an equal regulation between the geometries of the scrolls (10, 11) is realized also at any condition of speed of the turbo-supercharger or the turbogenerator, with the simultaneous closing/regulation of the fine regulation valve (8).

17. Control method of an exhaust gas recirculation system according to one of the claims from 1 to 9, the method comprising the step of controlling the geometry of the scrolls (10, 11) in a way equal to each other, in transient conditions of the turbo-supercharger (6,2) comprising said turbine (6) and a supercharger (2) supercharging the internal combustion engine (E) driven by said turbine or in transient conditions of a turbogenerator comprising said turbine (6) and an electric generator powering the vehicle batteries driven by said turbine.

18. Control method of an exhaust gas recirculation system according to one of the claims from 1 to 9, wherein when an EGR recirculation pipe does not have any fine regulation valve, the geometry of the first scroll (10) is regulated in opening/closing as the geometry of the second scroll (11) until an exhaust gas recirculation is necessary.

19. Computer program comprising program code means adapted to perform all the steps of the claims from 10 to 18, when such program is run on a computer.

20. Computer-readable means comprising a recorded program, said computer-readable means comprising program code means adapted to perform all the steps according to the one of the claims from 10 to 18, when said program is run on a computer.

## Patentansprüche

1. Abgasrezirkulationssystem in einem aufgeladenen Motor, der Motor (E) umfassend
- eine vorgegebene Anzahl von Zylindern,
- einen Ansaugkrümmer (4) und
- ein Paar Auspuffkrümmer (5, 5'), die voneinander unterschiedlich und getrennt sind, von denen jeder mit der Hälfte der Zylinder des Motors (E) verbunden ist, wobei nur einer (5) aus dem Paar Auspuffkrümmer mit dem Ansaugkrümmer (4) verbunden ist, um eine Abgasrezirkulation (EGR) nach vorgegebenen Betriebsbedingungen des Motors (E) umzusetzen,
- eine Twin-Scroll- (10, 11) Turbine (6), wobei ein erster Kanal (10) einen entsprechenden Einlass aufweist, der mit dem ersten Auspuffkrümmer (5) verbunden ist, und ein zweiter Kanal (11) einen entsprechenden Einlass aufweist, der mit dem zweiten Auspuffkrümmer (5') verbunden ist,
**dadurch gekennzeichnet, dass** jeder der Kanäle einen variablen Geometrietyp aufweist und einer der Kanäle (10) Mittel zur Regelung der Geometrie aufweist, die unabhängig von den Mitteln zu Regelung der Geometrie des anderen Kanals (11) sind,
und durch Umfassen von Mitteln zur Steuerung der Geometrie der Kanäle (10, 11), die konfiguriert sind zum
- Regeln (i) des ersten Kanals (10) als Funktion einer Masse des Abgases, das rezirkuliert werden soll (EGR),
- Regeln (ii) des zweiten Kanals (11) als Funktion der Gesamtenergie (Ecomp), mit der die Turbine (6) versorgt werden soll.

2. System nach Anspruch 1, wobei der erste Kanal (10) und der zweite Kanal (11) entsprechende effusionsstatische Abschnitte aufweisen, die zueinander gleich sind.

3. System nach einem der Ansprüche 1 oder 2, wobei die Kanäle identisch zueinander konstruiert sind.

4. System nach Anspruch 1, wobei die Regelung unter stationären Bedingungen einer Turbolader-Baugruppe (6, 2) umgesetzt ist, die die Turbine (6) und einen Supercharger (2) umfasst, um den Motor (E) aufzuladen, der durch die Turbine (2) angetrieben wird.

5. System nach einem der vorhergehenden Ansprüche 1 bis 3, wobei die Mittel zur Steuerung der Geometrie der Kanäle (10, 11) konfiguriert sind, die Geometrien unter transienten Bedingungen des Turboladers (6, 2) gleichermaßen zu steuern, der die Turbine (6) und einen Supercharger (2) zum Aufladen des Motors (E), der durch die Turbine angetrieben wird, umfasst.

6. System nach einem der vorhergehenden Ansprüche 1 bis 5, wobei die Regelungen (i, ii) umgesetzt sind, um zu vermeiden, dass der Turbolader (6, 2) oder der Turbogenerator eine Durchgangsdrehzahl erreicht.

7. System nach Anspruch 1, wobei die Regelung unter stationären Bedingungen einer Turbogenerator-Baugruppe (6, 2) umgesetzt ist, die die Turbine (6) umfasst, die axial mit einem Stromgenerator verbunden ist, der die Fahrzeugbatterien versorgt.

8. System nach Anspruch 7, wobei die Gesamtenergie eine Funktion einer Energie ist, die an den Stromgenerator übertragen werden soll.

9. System nach einem der vorhergehenden Ansprüche, wobei die Verbindung zwischen dem ersten Auspuffkrümmer (5) und dem Ansaugkrümmer (4) umfasst:
- ein Feinregelventil des EGR (8) und/oder
- ein Rückschlagventil (12) und/oder
- einen EGR-Kühler (9).

10. Verfahren zum Rezirkulieren von Abgas in einem Motor (E), der mittels einer Turbinen-Supercharger-Baugruppe (6, 2) mit einer Twin-Scroll- (10, 11) Turbine (6) aufgeladen wird,
wobei der Motor ein Paar Auspuffkrümmer aufweist (5, 5'), die voneinander unterschiedlich und getrennt sind, von denen jeder mit der Hälfte der Zylinder des Motors (E) verbunden ist, wobei nur einer (5) aus dem Paar Auspuffkrümmer mit dem Ansaugkrümmer (4) verbunden ist, um eine Abgasrezirkulation (EGR) nach vorgegebenen Betriebsbedingungen des Motors (E) umzusetzen, wobei die Turbine einen ersten Kanal mit einem entsprechenden Einlass aufweist, der mit dem ersten Auspuffkrümmer (5) verbunden ist, und einen zweiten Kanal (11) einen entsprechenden Einlass, der mit dem zweiten Auspuffkrümmer (5') verbunden ist,
wobei das Verfahren den Schritt umfasst, beide Kanäle (10, 11) so anzuordnen, dass jeder davon eine variable Geometrie aufweist, wobei ein Kanal (10) Mittel zum Regeln der Geometrie aufweist, die unabhängig von dem Mittel zum Regeln der Geometrie des anderen Kanals (11) sind, wobei das Verfahren die folgenden Schritte umfasst:
- erste Regelung (i) des ersten Kanals (10) als Funktion einer Masse des Abgases, das rezirkuliert werden soll,
- zweite Regelung (ii) des anderen Kanals (11) als Funktion der Gesamtenergie (Ecomp), mit der die Turbine (6) versorgt werden soll.

11. Verfahren nach Anspruch 10, umfassend den Schritt der Dimensionierung eines entsprechenden effusionsstatischen Abschnitts des ersten Kanals (10), der in der Abgasrezirkulation so zusammenarbeitet, als ob der Motor (E) nicht mit EGR versehen wäre.

12. Verfahren nach Anspruch 10 oder 11, umfassend den Schritt der Dimensionierung von effusionsstatischen Abschnitten der Kanäle (10, 11) in einer Weise, die zueinander gleich ist.

13. Steuerverfahren nach Anspruch 10, wobei die Schritte unter stationären Bedingungen einer Turbolader-Baugruppe, die die Turbine (6) und einen Supercharger (2) umfasst, der durch die Turbine angetrieben wird, oder unter stationären Bedingungen einer Turbogenerator-Baugruppe, die die Turbine (6) und einen Generator umfasst, der durch die Turbine angetrieben wird, um die Fahrzeugbatterien zu laden, ausgeführt werden.

14. Verfahren nach einem der Ansprüche 10 oder 13, wobei die Regelungen (i, ii) umgesetzt sind, um zu vermeiden, dass die Turbolader-Baugruppe (6, 2) oder der Turbogenerator eine Durchgangsdrehzahl erreicht.

15. Verfahren nach einem der vorhergehenden Ansprüche 10 bis 14, umfassend die folgenden Schritte:
- (30) Berechnung eines Abgasdurchflusses, der rezirkuliert werden soll, und eines Boostdrucks des Motors (E);
- (31) Regelung des ersten Kanals (10) a zur Umsetzung eines Gegendrucks, sodass die Rezirkulation des Abgasdurchflusses bei dem Boost-Druck sichergestellt wird;
- (32): Berechnung einer Energiemenge, die durch den ersten Kanal (10) an einen Impeller der Turbine (6) bereitgestellt wird,
- (33): Berechnung einer verbleibenden Energiemenge, die an den Impeller bereitgestellt wird, als Funktion des Boostdrucks;
- (34): Regelung des zweiten Kanals (11), um die verbleibende Menge an den Impeller der Turbine (6) zu übertragen.

16. Verfahren nach einem der Ansprüche 10 bis 15, wobei, wenn ein Feinregelventil (8) an einem EGR-Rezirkulationsrohr (54) vorhanden ist, eine gleiche Regelung zwischen den Geometrien der Kanäle (10, 11) auch bei jeder Bedingung der Geschwindigkeit des Turboladers oder des Turbogenerators mit der gleichzeitigen Schließung/Regelung des Feinregelventils (8) umgesetzt wird.

17. Steuerverfahren eines Abgasrezirkulationssystems nach einem der Ansprüche 1 bis 9, das Verfahren umfassend den Schritt der Steuerung der Geometrie der Kanäle (10, 11) in einer Weise, die sich gegenseitig entspricht, unter transienten Bedingungen des Turboladers (6, 2), der die Turbine (6) und einen Supercharger (2) umfasst, der den internen Verbrennungsmotor (E) auflädt, der durch die Turbine angetrieben wird, oder unter transienten Bedingungen eines Turbogenerators, der die Turbine (6) und einen Stromgenerator umfasst, der die Fahrzeugbatterien versorgt und durch die Turbine angetrieben wird.

18. Steuerverfahren eines Abgasrezirkulationssystems nach einem der Ansprüche 1 bis 9, wobei, wenn ein EGR-Rezirkulationsrohr kein Feinregelventil aufweist, die Geometrie des ersten Kanals (10) durch Öffnen/Schließen wie die Geometrie des zweiten Kanals (11) geregelt wird, bis eine Abgasrezirkulation notwendig wird.

19. Computerprogramm, umfassend Programmcodemittel, die angepasst sind, alle Schritte der Ansprüche 10 bis 18 auszuführen, wenn das Programm auf einem Computer ausgeführt wird.

20. Computerlesbares Mittel, umfassend ein aufgezeichnetes Programm, wobei das computerlesbare Mittel angepasst ist, alle Schritte nach einem der Ansprüche 10 bis 18 auszuführen, wenn das Programm auf einem Computer ausgeführt wird.

## Revendications

1. Système de recirculation de gaz d'échappement dans un moteur suralimenté, le moteur (E) comprenant
- un nombre prédéterminé de cylindres,
- un collecteur d'admission (4), et
- une paire de collecteurs d'échappement (5, 5'), distincts et séparés les uns des autres, chacun d'entre eux étant relié à la moitié des cylindres du moteur (E), un seul (5) de ladite paire de collecteurs d'échappement étant relié au collecteur d'admission (4) afin de réaliser une recirculation de gaz d'échappement (EGR) selon des conditions de fonctionnement prédéterminées du moteur (E),
- une turbine (6) à deux volutes (10, 11), dans lequel une première volute (10) possède une admission respective reliée audit premier collecteur d'échappement (5) et une seconde volute (11) possède une admission respective reliée audit second collecteur d'échappement (5'),
**caractérisé en ce que** chacune des volutes est à géométrie variable et l'une des volutes (10) possède un moyen de régulation de la géométrie qui est indépendant du moyen de régulation de la géométrie de l'autre volute (11),
et **en ce qu'**il comprend un moyen de contrôle de la géométrie des volutes (10, 11) configuré pour
- réguler (i) la première volute (10) en fonction d'une masse de gaz d'échappement à remettre en circulation (EGR),
- réguler (ii) la seconde volute (11) en fonction de l'énergie totale (Ecomp) à fournir à la turbine (6).

2. Système selon la revendication 1, dans lequel ladite première volute (10) et ladite seconde volute (11) possèdent des sections statiques d'effusion respectives qui sont égales les unes aux autres.

3. Système selon l'une des revendications 1 ou 2, dans lequel lesdites volutes sont de construction identique les unes aux autres.

4. Système selon la revendication 1, dans lequel ladite régulation est effectuée dans des conditions stationnaires d'un ensemble de turbocompresseur (6, 2) comprenant ladite turbine (6) et un suralimenteur (2) destiné à suralimenter le moteur (E) entraîné par la turbine (2).

5. Système selon l'une des revendications précédentes 1 à 3, dans lequel ledit moyen de contrôle de la géométrie des volutes (10, 11) est configuré pour réguler de manière égale lesdites géométries, dans des conditions transitoires du turbocompresseur (6, 2) comprenant ladite turbine (6) et un suralimenteur (2) destiné à suralimenter le moteur (E) entraîné par ladite turbine.

6. Système selon l'une des revendications précédentes 1 à 5,
dans lequel lesdites régulations (i, ii) sont réalisées afin d'empêcher le turbocompresseur (6, 2) ou le turbogénérateur d'atteindre une vitesse effrénée.

7. Système selon la revendication 1, dans lequel ladite régulation est effectuée dans des conditions stationnaires d'un ensemble de turbogénérateur (6, 2) comprenant ladite turbine (6) axialement reliée à un générateur électrique alimentant les batteries du véhicule.

8. Système selon la revendication 7, dans lequel ladite énergie totale dépend d'une énergie à transférer vers le générateur électrique.

9. Système selon l'une des revendications précédentes, dans lequel ladite liaison entre ledit premier collecteur d'échappement (5) et ledit collecteur d'admission (4) comprend :
- une soupape de régulation précise de l'EGR (8), et/ou
- une soupape anti-retour (12), et/ou
- un refroidisseur d'EGR (9).

10. Procédé de recirculation de gaz d'échappement dans un moteur (E) suralimenté à l'aide d'un ensemble de turbocompresseur (6, 2) avec une turbine (6) à deux volutes (10, 11),
dans lequel le moteur possède une paire de collecteurs d'échappement (5, 5'), distincts et séparés l'un de l'autre, chacun d'entre eux étant relié à la moitié des cylindres du moteur (E), un seul (5) de ladite paire de collecteurs d'échappement étant relié au collecteur d'admission (4) afin de réaliser une recirculation de gaz d'échappement (EGR) selon des conditions de fonctionnement prédéterminées du moteur (E), dans lequel la turbine possède une première volute avec une admission respective reliée audit premier collecteur d'échappement (5) et une seconde volute (11) avec une admission respective reliée audit second collecteur d'échappement (5'),
le procédé comprenant l'étape d'agencement des deux volutes (10, 11) de sorte que chacune d'entre elles possède une géométrie variable, une volute (10) ayant un moyen de régulation de la géométrie qui est indépendant du moyen de régulation de la géométrie de l'autre volute (11), le procédé comprenant les étapes suivantes :
- une première régulation (i) de la première volute (10) en fonction d'une masse de gaz d'échappement à remettre en circulation,
- une seconde régulation (ii) de l'autre seconde volute (11) en fonction de l'énergie totale (Ecomp) à fournir à la turbine (6).

11. Procédé selon la revendication 10, comprenant l'étape de dimensionnement d'une section statique d'effusion correspondante de la première volute (10), participant à la recirculation des gaz d'échappement, comme si le moteur (E) n'était pas équipé d'une EGR.

12. Procédé selon la revendication 10 ou 11, comprenant l'étape de dimensionnement des sections statiques d'effusion des volutes (10, 11) de manière identique.

13. Procédé de contrôle selon la revendication 10, dans lequel lesdites étapes sont exécutées dans des conditions stationnaires d'un ensemble de turbocompresseur comprenant ladite turbine (6) et un suralimenteur (2) entraîné par ladite turbine, ou dans des conditions stationnaires d'un ensemble de turbogénérateur comprenant ladite turbine (6) et un générateur entraîné par ladite turbine afin de recharger les batteries du véhicule.

14. Procédé selon l'une des revendications 10 ou 13, dans lequel lesdites régulations (i, ii) sont effectuées afin d'empêcher l'ensemble de turbocompresseur (6, 2) ou le turbogénérateur d'atteindre une vitesse effrénée.

15. Procédé selon l'une quelconque des revendications précédentes 10 à 14, comprenant les étapes suivantes :
- (30) le calcul d'un débit de gaz d'échappement à remettre en circulation et d'une pression de suralimentation du moteur (E) ;
- (31) la régulation de la première volute (10) afin de créer une contre-pression de façon à garantir la recirculation dudit débit de gaz d'échappement selon ladite pression de suralimentation ;
- (32) : le calcul d'une quantité d'énergie fournie par ladite première volute (10) à une pompe de la turbine (6),
- (33) : le calcul d'une quantité restante d'énergie à fournir à ladite pompe, en fonction de ladite pression de suralimentation ;
- (34) : la régulation de la seconde volute (11) afin de transférer ladite quantité restante vers la pompe de la turbine (6).

16. Procédé selon l'une des revendications 10 à 15, dans lequel, lorsqu'une soupape de régulation précise (8) est présente sur un conduit de recirculation EGR (54), une régulation identique entre les géométries des volutes (10, 11) est effectuée également dans n'importe quelle condition de vitesse du turbocompresseur ou du turbogénérateur, avec la fermeture/la régulation simultanée de la soupape de régulation précise (8).

17. Procédé de contrôle d'un système de recirculation de gaz d'échappement selon l'une des revendications 1 à 9, le procédé comprenant l'étape de contrôle de la géométrie des volutes (10, 11) de manière identique, dans des conditions transitoires du turbocompresseur (6, 2) comprenant ladite turbine (6) et un suralimenteur (2) suralimentant le moteur à combustion interne (E) entraîné par ladite turbine, ou dans des conditions transitoires d'un turbogénérateur comprenant ladite turbine (6) et un générateur électrique alimentant les batteries du véhicule entraînées par ladite turbine.

18. Procédé de contrôle d'un système de recirculation de gaz d'échappement selon l'une des revendications 1 à 9, dans lequel, lorsqu'un conduit de recirculation EGR ne possède pas de soupape de régulation précise, la géométrie de la première volute (10) est régulée en termes d'ouverture/de fermeture comme la géométrie de la seconde volute (11) jusqu'à ce qu'une recirculation des gaz d'échappement soit nécessaire.

19. Programme informatique comprenant un moyen de code de programmer adapté pour exécuter toutes les étapes des revendications 10 à 18, lorsque ledit programme est exécuté sur un ordinateur.

20. Moyen lisible par un ordinateur comprenant un programme enregistré, ledit moyen lisible par un ordinateur comprenant un moyen de code de programme adapté pour exécuter toutes les étapes selon l'une des revendications 10 à 18, lorsque ledit programme est exécuté sur un ordinateur.
